# EUROPEAN PATENT SPECIFICATION

(11) **EP 2 312 360 B1**
(45) Date of publication and mention of the grant of the patent: **19.09.2012**
(21) Application number: 11151810.6
(22) Date of filing: 18.07.2008
(51) Int. Cl.: G02B 6/44, H01B 7/18, H01B 13/24, B29C 70/20, B29C 70/52, B29C 70/70, B29C 70/88, H01B 7/04, H01B 7/36, B29L 31/34

(54) **Composite cable**
Verbundkabel
Câble composite

(30) Priority: 20.07.2007 NO 20073832
(43) Date of publication of application: 20.04.2011
(62) Divisional of application: 08793884.1
(73) Proprietor: FMC Kongsberg Subsea AS, 3601 Kongsberg (NO)
(72) Inventor: Carlsen, Hans-Paul, 3677, Notodden (NO); Inderberg, Olav, 3615, Kongsberg (NO); Bendixen, Christian, 1400 Ski (NO); Grønvold, Eirik, 1400, Ski (NO)
(74) Representative: Langan, Hans

(56) References cited:
- WO-A-02/101760
- WO-A-2006/054092
- GB-A- 620 857
- GB-A- 2 172 079
- US-A- 4 239 335
- US-A- 4 725 453
- US-A- 5 234 058
- US-B2- 6 843 321

## Description

### Field of the Invention

The invention relates to a method for manufacturing a composite cable, and use of a composite cable.

### Background of the Invention

Works are performed in an oil or gas well to stimulate or treat the well, whereby the production is increased, to replace various equipment such as valves, sleeves etc., to make measurements, to monitor the state of the well, or other intervention tasks requiring equipment being accessed inside, operated inside, installed into, or retrieved through the production conduits of a well.

Intervention into a well to access well hardware, measure performance, or increase the production rate or volume is made after a cost/benefit evaluation. Even if the intervention is deemed advantageous, the intervention costs may be too high or the work considered too difficult and time consuming. For remote subsea wells, simply gaining access to the Christmas tree just to insert the wireline is a challenge without the extraordinary efforts of using a large vessel and deploying a pressure containing conduit (completion/workover riser) to shield the wireline from environmental forces from ocean; a "heavy" intervention. Onshore or offshore platform wells, have easy access into the Christmas tree, relying on the surrounding infrastructure (access roads, cranes, platform structures, etc) allow smaller, quickly deployable, low cost wireline units to be dispatched to the well; "light" intervention. Because of this, the oil recovery from an onshore or offshore platform or onshore well is up to twice the recovery of a subsea well with similar reservoir conditions. As mentioned above, this is caused by the more easy access making a better program for well maintenance and reservoir management practically possible and profitable. To bridge this economic gap between onshore/platform and subsea well interventions, Riserless Light Well Intervention (RLWI) techniques have been introduced. These techniques utilize much smaller vessels and far less equipment. As the name implies, RLWI does away with the completion/workover riser, by deploying the wireline drum and unit from the surface and allowing the wireline to traverse "open water" down to the subsea well, or deploying the wireline drum unit subsea on top of or adjacent to the subsea well. However, these techniques may be limited to accessing only those wells located in relatively shallow water, depending on the material strength of the wireline.

Recently, some subsea wells along with some onshore or platform wells are being constructed so very deep or constructed with unusual access routes to access petroleum reservoirs (some wells drilled to near horizontal angles, side lateral angles, up dip, or combinations thereof), making traditional wireline access physically challenging. Usually, the weight of the intervention tool suspended by the wireline is sufficient to lower the tool to its desired location in the well, by unwinding wireline off of its take-up reel and feeding it into the well. As the well length increases or the well path moves from vertical to horizontal, the tool weight may not be enough to deploy the wireline tool properly. Even with the use of a "tractor" to electro-mechanically pull the tool further into the well, there are limitations on how far it can reach due to the drag forces acting on the cable thereby increasing the load necessary to pull the tool (and tractor) out of the well, not to mention taxing the axial strength of the wireline to maintain structural integrity to lower or retrieve the wireline tool.

A well intervention may be difficult, as existing barriers have to be removed before entering the well. There are strict rules regarding which measures being required to prevent an uncontrolled blowout during such works. Thus, when well intervention shall be performed, a provisional pressure barrier, such as a blowout preventer has to be provided along with a pressure control head (PCH) which allows the wireline to enter or egress the well while the well is in a pressurized state. The wireline that enters the well often is provided in one of two configurations: slick line and braided wire cable. But they have their limitations in use. The slick line has a smooth outer diameter which is relatively small, lightweight and simpler to seal around for pressure control (traditionally called a stuffing box). However, it is limited in tensile strength and cannot pass electrical current unless it is sheathed with an insulating jacket. A braided cable is stronger and can convey electrical power and signals through its internal core, but this comes at a price in that it has a rough braided exterior requiring a different PCH design incorporating a grease injection unit to fill the crevices in the cable's exterior geometry to create a temporary smooth bore that the PCH's seals can pressure seal against. The grease injection unit becomes problematic in subsea RLWI applications as it becomes increasingly difficult to remotely pump grease to the PCH, grease, can trap well hydrocarbons as the cable exits the well, which could lead to minor hydrocarbon release to the environment or worse, form hydrates with the surrounding sea water. The braided exterior also creates a rougher exterior, which can increase the relative frictional drag between the cable and the side wall of the well's conduit, making it unsuitable for some horizontal and long reach wells.

Both braided wires and slick lines have relatively limited strength and a moderately high weight to strength ratio as metallic alloys such as improved plow steels, and stainless steels are traditionally used. These materials are becoming less efficient in providing the needed strength for the deeper wells and longer lateral offsets. In addition, the material's weight is heavier than the density of the surrounding sea water or wellbore fluids, compounding the load requirements on the wireline itself as more wireline is paid out into the well.

To mitigate the disadvantages experienced with the above wireline configurations it is proposed to instead use a wireline made from a carbon-fibre filled composite cable. A composite cable has a high strength to size ratio and strength to weight ratio and can be made axially stiff or rod-like to enable it to be pushed or pulled into highly deviated wells. Its construction can be made with a very smooth impervious outer surface to reduce the frictional drag forces in the well and simplify the sealing design of the PCH (like the slick line). Another advantage is that it can be constructed to include electrical and/or optical conductors in its cross-sectional matrix for power and signal transmission into the well. This further increases the operational reach of the composite cable by enabling power for tractor assist. The composite cable's construction has substantially more axial strength than its steel counterparts by almost an order of magnitude. The tensile strength of a cable with carbon fibres in a vinyl ester matrix may be in the region of 130 000 MPa. By finishing the surface of the cable with a low friction compound and smooth surface finish, may further reduce frictional drag and make it less susceptible to chemical attack from wellbore fluids.

### Prior Art

There exist a number of publications suggesting various kinds of cables that can be used for well intervention. US Patent No. 6,600,108 describes a cable consisting of a number of electrical conductors grouped together within a jacket; the void between the conductors filled with a filler, for example an elastomer. To increase the strength of the cable it has a steel armour winding around the jacket.

Another example is disclosed in US Patent Application No. 2006/0045442. There is shown a conductor bundle with an optical fibre centrally positioned on the centre axis of the conductor bundle and a plurality of metallic conductors helically positioned around the optical fibre. This conductor bundle may be used as one of the conductor bundles described above.

None of the above devices can correctly be described as a cable as they are intended to be surrounded by a helically wound steel armour around the jacket, similar in construction to the exterior of a braided cable. They therefore have all the same disadvantages of the braided cable as explained above.

WO 2006/054092 A1 describes a slickline cable for well intervention consisting of an electrical conductor covered by an insulating material, and a method of manufacturing a composite cable according to the preamble of claim 1. This insulated conductor is surrounded by a polyetheretherketone (PEEK) with carbon fibres which are braided around a central conductor. When manufacturing this cable, the conductor and braids are brought together and heated such that the matrix melts and the cable is formed by a pultrusion process.

None of these publications mention an acceptably diminutive diameter to be ideally suited for wireline well intervention, nor address the problems associated with the manufacture of a composite cable identified in this disclosure. One such problem is the presence of cracks (especially microcracks) that enables hydrocarbons to enter the matrix. As the cable is withdrawn from the well hydrocarbon gas that has entered into the cracks expands. This shortens the life of the cable. Another problem is the difference in elastic modulus of copper and fibres. This has on occasions resulted in that the copper conductors have been stretched to the point that they no longer conduct.

### Summary and Objects of the invention

An object of the invention is to manufacture a cable that is especially good for use in well intervention.

Still another object is to provide a method for manufacturing a cable which have high strength and at the same can withstand large temperature and pressure differences. There is also an aim to provide such a cable with an outer smooth surface.

These objects are achieved with the method, and use as defined in the attached independent claims 1 and 12, with preferred embodiments given in the dependent claims.

The invention relates to the use of a cable as a well intervention cable, wherein the cable comprises a plastic material reinforced by carbon or glass fibre, whereby the cable achieves the desired degree of rigidity, and a coating of a material having low friction coefficient.

### Brief description of the Drawings

The invention will now be described with reference to the accompanying drawing where
Fig. 1 shows a cable according to the invention,
Fig. 2 shows a detail of a cable according to an alternative embodiment,
Fig. 3 is a diagram showing the cable production train,
Fig. 4 is a sketch of the production thermal environment, and
Fig. 5 is a diagram of the heat distribution during manufacture.
Fig. 6 is an elevated sketch showing the pre-shaper stage of the manufacturing process.

### Description of the preferred Embodiments

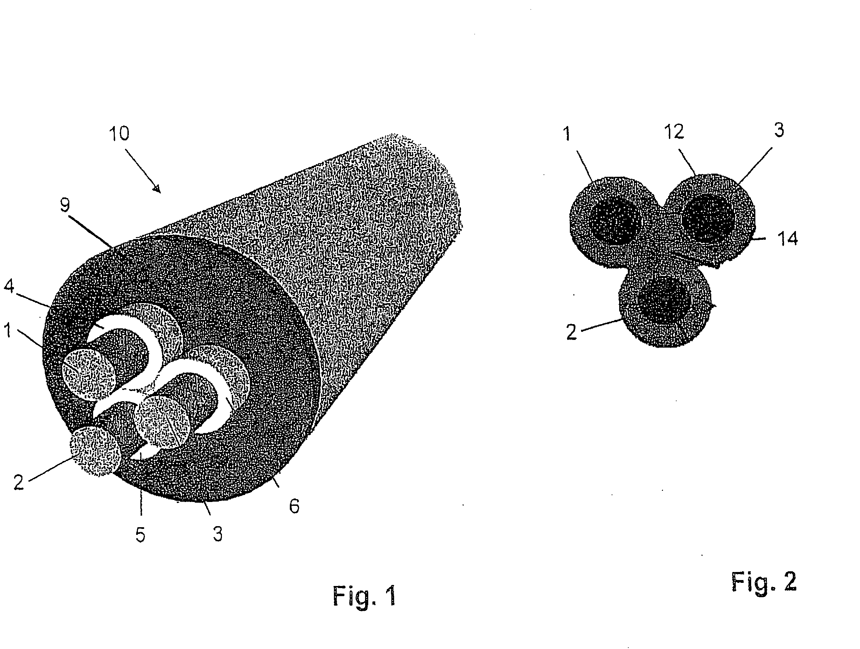

In Fig. 1 there is shown a cable of the prior art kind as disclosed in US Patent No. 6843321, belonging to the applicant. The cable is manufactured of a composite material reinforced with carbon fibres or, alternatively, glass fibres in a matrix of a plastics material that have the required physical properties. The cable has a low density, less than 1,5 g/cm³ giving it an approximately neutral buoyancy in oil (i.e. in the well). Its thermal conductivity is in the range of 0,25-0,35 W/mK, and a thermal expansion coefficient in the range of 0,00013 per degree C. The rupture strength of the cable is about 85 kN, i.e in the same range as steel wires having the same external diameter (9 mm), a tensile strength in the range of 850-1600 MPa, and an elastic modulus in the range of 40000 (glass fibre) -135000 (carbon fibre) MPa.

As shown on Fig. 1 the cable 10 comprises a matrix 9 and a number of electrical conductors 1, 2, 3 each encased in an insulator 4, 5, 6. In this example the insulator is a hard thermoplastic such as PEEK.

Fig. 2 shows a detailed view of the conductors according to an alternative embodiment of the invention. In this case the conductors 1, 2, 3 are wholly encased in the insulator 12 as a unit. A fibre optic cable 14 is located in the axial centre of the cable.

The present invention provides a cable comprising the same elements, with at least one electrical conductor 1, 2, 3 encased in one or several separate insulators 4, 5, 6, 12 arranged within a matrix 9. There may possibly be arranged at least one optical fibre within the cable. There may in addition to the configuration of each conductor 1, 2, 3 arranged with separate insulators 4, 5, 6 and the configuration of three conductors 1, 2, 3 within a common insulator 12 also be an arrangement where one electrical conductor is arranged in one separate insulator and possible two other electrical conductors arranged in a common but separate insulator from the first. The matrix 9 comprises a polymer matrix with reinforcement fibres embedded in the matrix.

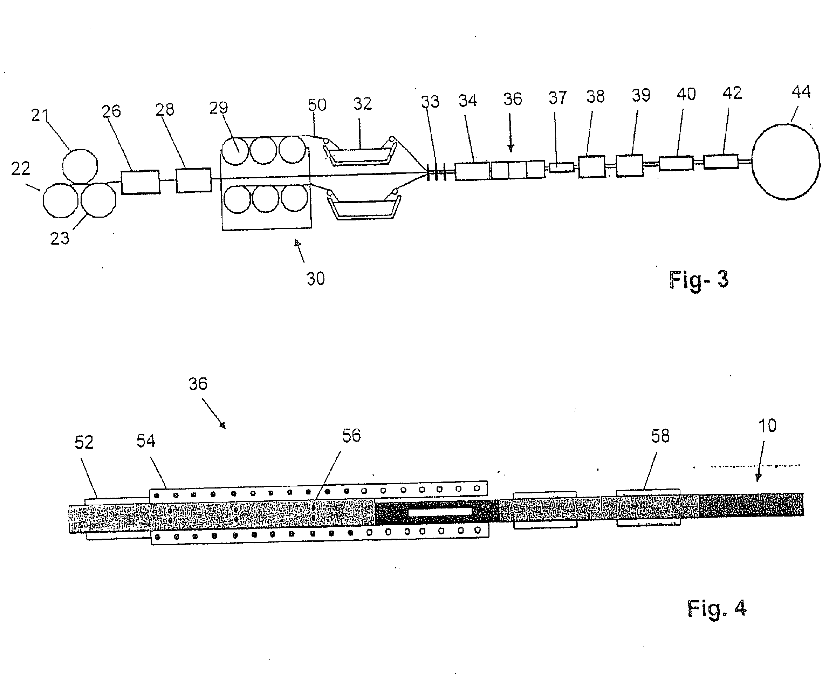

Fig. 3 shows a simplified diagram of the production train for the manufacture of the cable 10.

In the shown diagram the copper conductors are finished separately with each encased in an insulator and wound up on drums 21, 22, 23. The number of drums is dependent upon the number of conductors employed, and also the way the conductors are isolated. In addition, there may be a separate drum (not shown) for a fibre optic cable. From the drums the conductors pass through a heater 26 and then through a finisher 28.

Carbon fibres arranged to be embedded in the matrix and form reinforcements of the polymer matrix 9, are each wound on a number of bobbins 29 in a fibre rack 30. These reinforcement fibres may be carbon or glass or other suitable fibre material. The fibres are thereafter combined with a polymer that makes up the matrix 9 of the finished composite. In an embodiment of the invention the polymer is a thermoset polymer such as a vinyl ester in the form of a liquid resin that is poured into a resin bath 32. As the fibres passes through the resin bath 32 they will be soaked/coated with the liquid resin. On exiting the resin bath, the carbon tows are positioned within the cross section of the finished cable in a pre―shaping section 33. This section comprises an array of tooling which squeezes away excess resin as the product is moving forward and gently shapes the rod prior to entering the main die nozzle 34. The pre shapers also ensure that the conductors are located in their correct position in the cable, the correct fibre distribution and ensures that a homogenous cross section is achieved. The main die 34 gives the cable its final shape. Thereafter the cable passes through the post-curing station 36. Optionally the cable can pass through a station 37 to be covered by an insulation layer. The cable is drawn through the machine by pullers 38, 39 and there may be provided a meter 40 for measuring the length of the cable before it is wound onto the final drum 44. Optionally, an ultrasound quality check 42 may be included in the set-up. There are also means (not shown) to provide a constant tension on the conductors.

The amount of fibres in the finished cable should preferably be above 60 % and more preferably 67 ― 71 %. This is important both for the process when manufacturing the cable but it will also give the finished cable a higher tensile strength. The fibres used are also in a whole length for the length of the cable.

The congealing of the resin is chemically initiated by the heat from the main die 34 and a rigid, cured cable is formed that corresponds to the cavity of the die. The pull speed, temperature of the die, surrounding temperature and surrounding moisture are registered and stored regularly, possibly every fourth second by a system for registering and storing the data.

To form the matrix 9 there is used a polymer matrix with embedded fibres. The polymer matrix may be formed by a thermoset polymer which may be added through a resin bath as explained. It is also possible to envisage a thermoset polymer added through strips of material added in a similar manner as the fibre. A thermoset polymer is a polymer which becomes harder after a curing process during which energy is added to the polymer. During this curing process there are formed crosslinks in the material. Alternative the matrix may be formed by thermoplastic resin. In the case with a polymer matrix added to the fibres in a bath, chemical agents may be added to the liquid resin to improve the properties of the finished cable. The amount of and which agents that are used is to dependent upon several factors, the size (nominal diameter) of the cable, the kind of resin/polymer matrix used and the desired curing process, which will be described in more detail below.

There are several problems associated with manufacturing a cable that will be used in a hydrocarbon well environment. The first is the bonding between the insulator and the copper conductors and between the insulator and the matrix. It is important to ensure that the composite cable can support the weight of the copper during well intervention operations. The cable will be subject to high tensile loads due to the long vertical sections. If bonding is not achieved then the copper conductors can break due to tensile and/or gravity loads.

According to the invention this is mitigated by possibly different steps. First the conductor (which has arrived finished encased in an insulator) will according to the invention be heated to around 150 °C. This is done in the pre-heater 26. This has the effect of "baking" the thermoplastic insulator to create a better bonding between the insulator and the copper and to remove absorbed water in the insulator material, for instance PEEK around the conductors, possibly cobber conductors. Any water in the plastic insulator can lead to the formation of steam bubbles during the later curing process of the cable. Such bubbles will reduce the strength and bonding within the cable. Secondly the conductor's surface may be treated to improve the chemical bonding between the molecules in the plastic and the resin. There are many kinds of treatment that can be used, such as a chemical treatment for example washing with an acid. However, in an embodiment of the invention the plastic is subjected to an electric discharge. This treatment is of a kind manufactured by Vetaphone under the trade name "Corona-Plus" and is a treatment generally used on plastic films to improve the surface for writing or printing. However, this treatment has to the knowledge of the inventors never before been used to improve the bonding between a hard thermoplastic such as PEEK and a resin liquid for use in a composite cable.

Another problem relates to the formation of cracks in the composite when it cures. During curing the matrix will shrink. During shrinkage cracks may form in the matrix of the composite due to temperature gradients during curing. Often such cracks are microcracks, which may escape an ordinary visual examination. Cracks can weaken the finished cable and even cause the cable to break under a load far lower than the design load. One reason for this is that hydrocarbon gas molecules can migrate into the cracks due to the high pressure in the well. When the cable is withdrawn from the well the pressure decreases. This causes any gas bubbles to expand in size. Any gas molecules trapped inside the cable matrix will also expand and try to exit the cracks but the expansion rate at normal pulling speeds is such that the gas cannot escape from the cracks and the result can be very damaging to the cable. Another reason is that cracks may cause serious stress concentrations that may cause fibres to break.

According to another aspect of the invention this problem may be addressed in two ways. The cable may be heated as it passes through the curing station 36 of the manufacturing process. This heating is controlled partly by applying heat to the cable and partly by adding chemicals to the resin/polymer matrix to cause an exothermal reaction that heats the cable from within and ensures a uniform heating over the cable cross section.

In an embodiment of the invention three different chemicals are used as initiators, each of them will be activated within a designed temperature range during the curing. These are carefully controlled by the chemical formulations and the temperature profiles. This will reduce internal, or residual, stresses from the curing process.

The amount of and types of chemical additives which may be added to the polymer matrix, depends as said on several factors. The type of polymer matrix chosen will influence the chose of additives added. To achieve the desired temperature gradient through the cable during the curing process there are added additives which gives an exothermic reaction in the matrix, which exothermic reactions start at a given temperature or temperature interval to the polymer matrix or resin. One example of such additive is a curing agent and may be in the form of organic peroxides, whereof one is a peroxycarbonate. These agents may also be initiators for (co)polymerization and thereby provide more cross links in the matrix after curing. When adding several different agents giving an exothermic reaction, the temperature intervals for these agents may be overlapping. These agents may also be vulcanisation agents.

In addition to these agents giving an exothermic reaction within the matrix and thereby work as curing agents, there may be added agents as accelerators for accelerating the process, there may also be added slip agents, to improve the slip of the matrix in relation to the different equipment used in the manufacturing process. There may also be added agent to limit or prevent shrinkage of the matrix during the curing process. In some instances there may also be added additional styrene into the matrix mix or there may be enough styrene in the polymer matrix originally, to ensure good cross-binding in the polymer matrix or resin. During the process the fibres (tows) 50, after escaping from the resin bath 32, are pulled into the preshapers 33. During this phase the resin is in a liquid phase in one embodiment. Then the resin enters a gel phase and eventually forming a solid. Through these steps the cable is heated in a controlled manner. This will create crosslinks in the resin and result in a stronger bond between the resin molecules and between the resin and the fibres. Some of the heating comes from the dies as the cable is drawn through. However, the heating must be in a controlled manner and this is ensured by adding heat to the cable. The added heat around the cable triggers the start of the initiators for the exothermal process, which initiators are agents added to the polymer matrix. The various initiators will be functional at various temperatures and the controlled heating ensures that each component reacts at a preset stage in the process. By this both external and internal heating of the cable one can achieve a desired temperature gradient through the cable during the curing process. The temperature gradient is substantially even across the cable during this process. By substantially even one should herein understand that the temperature may form a graph with a shallow arc when looking at it in a cross section of the cable giving a low temperature gradient across the cable. The temperature in a cable without the exotherm agents will form a more arced graph across the cable. The heat transport out of the cable (during curing) must be tightly controlled. There are exothermic reactions in the matrix during the curing phase and that is managed through the combined use of heaters and chemical additives, as said above.

The temperature rises from about 140 °C during this phase till it reaches about 180 °C in the constant diameter section in the cable. When leaving this section the cable is allowed to cool down. However, this cooling must also be managed to avoid temperature gradients across the cable. The temperature reduction should be done such that it ensures minimum residual stress in the cable. The temperature gradient across the cable is in this phase very important and to manage this there are installed afterheaters 36b (Fig. 3) to ensure a controlled cooling process. A controlled and small temperature gradient through the cable during cooling will result in a reduced residual stress in the cable.

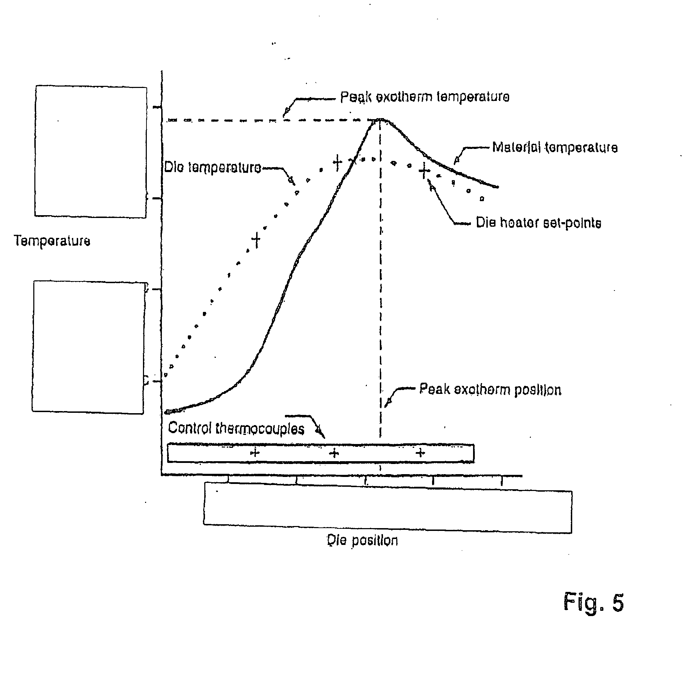

Fig. 4 shows the setup of the heat system during the curing process and Fig. 5 shows an example of a curing curve. The cable passes through the main die 34 and then the curing station 36. In the curing station 36 the cable is surrounded by a heat element 54, for heating the cable. Temperature controllers 56 are located to record the temperatures. At 58 there are located insulating devices so that also the cooling is controlled. What is achieved in this process is a controlled temperature rise in the cable up to a maximum and then a controlled cooling during the final phase of the process. These heat zones ensure continuous and uniform curing of the profile. Fig. 5 shows an example of a curing curve. The main die heats up the cable from without and the exothermic agents ensures that the inside temperature follows in step. It is important that the temperature gradient across the cable is held as minimal as possible. As can be seen from the curves in fig. 5 the curve of the material temperature follows the curve of the die temperature giving a small temperature gradient in the cable. The exothermal agents ensure that the material temperature curve follows the temperature the cable is exposed to from the outsider during heating of the cable. As the temperature in the die increases the material temperature comes closer to the actual die temperature. As the die temperature is kept steady and or reduced the material temperature will still increase until a peak exotherm temperature wherefrom the material temperature also will start to decrease. The material temperature is also kept close to the die temperature during the cooling process. In this part of the process the material temperature will be above the die temperature, as it is a controlled cooling process where one is still exposing the cable to an external heat source and regulating this to have a more even temperature gradient in the cable. The material in the cable is during such a procedure through the die, steady increased in temperature by adding temperature externally and matching the external temperature with exotermic starting agent within the material of the cable thereby ensuring a small temperature gradient across the cable during heating, and controlling the external temperature during cooling to have the material temperature close to the die temperature both during heating and cooling of the cable and thereby ensure a low temperature gradient across the cable during the whole curing process. The material temperature curve and the die temperature curve may be different for different cables, dependent on among other factors diameter size, composition of cable and material in the cable. The resultant cable product has no discernable microcracks and a smooth exterior finish.

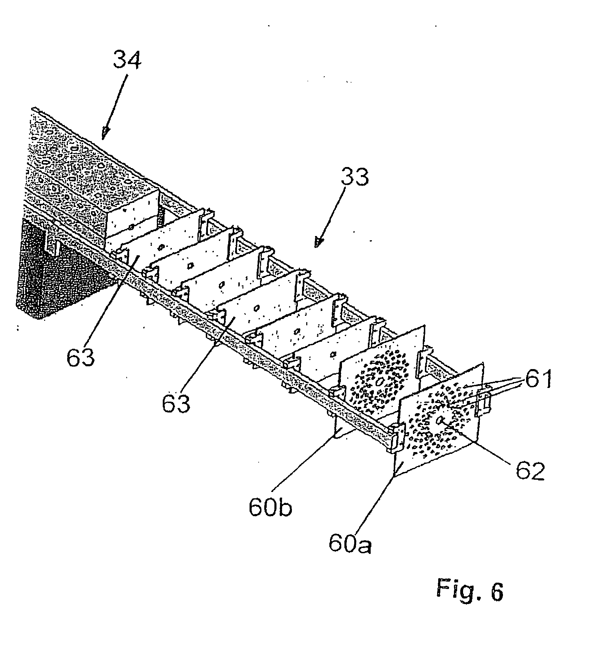

To achieve the high axial strength of the cable, the carbon fibres in the matrix may be given an orientation parallel with a longitudinal axis of the cable, i.e. the fibres are not wound or braided around the cable, put kept in an orientation parallel to the centrally located conductors in the cable. The fibres are also arranged substantially in parallel with each other. The fibres are therefore not wound or braided. This is achieved with the mentioned pre-shaper stage where one possible embodiment is schematically shown in Fig. 6. In this stage the cable is given its form and the conductors and matrix with the embedded fibres are given their relative position. The pre-shaper stage comprises guiding plates 60a, 60b, where the conductors with the insulator is guided through opening 62 in the centre of the guide plate 60a, and each fibre in the matrix is guided through a separate hole 61 in the guide plate. There will by this be several holes 61 (only some of which are shown in figure 6) in the guiding plates 60a, 60b for the fibres that will be embedded in the matrix in the final cable. This system gives a good control of the relative position of all the fibres and the conductors and ensures that the fibres are kept in parallel with the conductors. This process also ensures that the fibres in the matrix layer are not wound around the conductors. After the guide plates 60a, 60b the cable is lead through a number of shaping elements 63 with decreasing diametrical openings to pre-shape the cable and remove excess matrix material as the cable passes through the pre-shaper elements. Both guide plates 60a, 60b and pre-shaping elements 63 are in the shown embodiment shown arranged attached to a support structure ensuring that the centre of all the guide plates 60a, 60b and shaping elements 63 are aligned. The cable is from the pre-shaper guided in to the die nozzle 34 and then trough the curing station 36 as shown in fig. 3. The resultant cable product has an exceptionally high tensile strength, breaking at 131 kN (13.3 metric tons).

It should be noted that the above description discloses just one example of how a cable can be manufactured and it should be apparent that different matrix and different cable size will require other additive agents and/or different kind of agents. Also a larger size cable may require other proportions of agents than a smaller diameter cable.

The manufacturing process is now explained with several specific steps introduced into the making of a final cable. One will understand that a cable may be made with only introducing one or several but not all of the steps as described above. One may envisage a manufacturing method as previous known with the addition of the present invention of preheating of the conductors before they are joined with the outer matrix layer but with the further method as prior known. Additionally the outer layer of the insulator may be treated by an electric charge. Additionally the cable may be formed with reinforcement fibres only parallel with the conductors. In another embodiment the invention may be improved by the addition of adding curing agents giving an exothermic reaction in the matrix. One may also envisage a method using some of these elements in addition to prior solutions but not all, or a method using all of these novel steps in the method for manufacturing a cable. It is also possible to envisage a composite cable comprising at least one fibre in a polymer resin matrix arranged within the polymer resin matrix wherein that the at least one fibre in the polymer resin matrix is arranged in parallel with the axis of the composite cable.

The invention is now explained with a non-limiting embodiment, and a skilled person will understand that there may be made alterations and modifications to the embodiment within the scope of the invention as defined in the attached claims.

## Claims

1. A method for manufacturing a composite cable (10) comprising fibre (50) in a polymer matrix (9) and having at least one conductor (1, 2, 3), comprising the steps of:
a) providing at least one electrical conductor (1, 2, 3) covered by an insulator (4, 5, 6, 12),
b) providing at least one fibre (50) for strength,
c) coating the fibres (50) with a liquid thermosetting or thermoplastic resin,
d) combining the fibres (50) and the conductors (1, 2, 3) to form a cable (10), and
e) pulling the resultant cable (10) through a curing station (36) to cure the fibre-resin matrix (9),
f) **characterized in that** the insulated conductors (1, 2, 3) are heated before being combined with the fibres (50).

2. Method according to claim 1, **characterized in that** the insulated conductors are heated to a temperature of at least 150 degrees Celsius before being combined with the fibres (50).

3. Method according to claim 1 or 2, **characterized by** including treating the exterior surface of the electrical conductors and electrical insulator jacket (4, 5, 6, 12) before combining the insulator jacket (4, 5, 6, 12) with the conductor (1, 2, 3) with the carbon fibres matrix (9).

4. Method according to claim 3, **characterized in that** the surface of the insulator (4, 5, 6, 12) is treated with an electric discharge process.

5. Method according to one of the claims 1-4, **characterized in that** that the fibres (50) and resin pass through a pre-shaper stage before the curing station (36), where the fibres (50) are arranged with an orientation parallel to each other and the conductors (1, 2, 3).

6. Method according to claim 1, **characterized by** including adding exothermic starting agents to the liquid resin such that a substantially even temperature profile across the cable (10) is achieved during curing.

7. Method according to claim 6, **characterized in that** the exothermic starting agents comprises at least two exothermic starting agents, which act at different temperatures.

8. Method according to one of the claims 1-7, **characterized by** including adding styrene to the liquid resin.

9. Method according to claim 8, **characterized in that** the amount of styrene is around 2-10 % by volume of the liquid resin.

10. Method according to one of the claims 1-9, **characterized by** heating the cable (10) during the curing process.

11. Method according to claim 1, **characterized by** controlled cooling the cable (10) during a post-curing process to assure a properly cured resin matrix.

12. Use of a composite cable (10) manufactured according to one of the previous claims 1-11, for use as a well intervention cable.

## Patentansprüche

1. Verfahren zum Herstellen eines Verbundkabels (10), das eine Faser (50) in einer Polymermatrix (9) aufweist und mindestens einen Leiter (1, 2, 3) besitzt, das folgende Schritte aufweist:
a) Vorsehen von mindestens einem elektrischen Leiter (1, 2, 3), der von einem Isolator (4, 5, 6, 12) bedeckt ist,
b) Vorsehen von mindestens einer Faser (50) für die Festigkeit,
c) Beschichten der Fasern (50) mit einem flüssigen Duroplast- oder Thermoplast-Harz,
d) Kombinieren der Fasern (50) und der Leiter (1, 2, 3), um ein Kabel (10) zu bilden, und
e) Hindurchziehen des resultierenden Kables (10) durch eine Härtestation (36), um die Faser-Harz-Matrix (9) auszuhärten,
f) **dadurch gekennzeichnet,**
**dass** die isolierten Leiter (1, 2, 3) erhitzt werden, bevor sie mit den Fasern (50) kombiniert werden.

2. Verfahren nach Anspruch 1,
**dadurch gekennzeichnet,**
**dass** die isolierten Leiter auf eine Temperatur von mindestens 150 °C aufgeheizt werden, bevor sie mit den Fasern (50) kombiniert werden.

3. Verfahren nach Anspruch 1 oder 2,
**gekennzeichnet durch** das Anwenden einer Behandlung der Außenoberfläche der elektrischen Leiter und des elektrischen Isoliermantels (4, 5, 6, 12) vor der Kombination des Isoliermantels (4, 5, 6, 12) mit dem Leiter (1, 2, 3) mit der Karbonfasermatrix (9).

4. Verfahren nach Anspruch 3,
**dadurch gekennzeichnet,**
**dass** die Oberfläche des Isolators (4, 5, 6, 12) mit einem elektrischen Entladungsprozess behandelt wird.

5. Verfahren nach einem der Ansprüche 1 bis 4,
**dadurch gekennzeichnet,**
**dass** die Fasern (50) und das Harz vor der Härtestation (36) durch eine Vorformungsstation hindurchgehen, in der die Fasern (50) mit einer Orientierung parallel zu einander und den Leitern (1, 2, 3) angeordnet werden.

6. Verfahren nach Anspruch 1,
**gekennzeichnet durch** das Hinzufügen von exothermen Startermaterialien zu dem flüssigen Harz, sodass während des Aushärtens ein im wesentlichen gleichmäßiges Temperaturprofil über das Kabel (10) erreicht wird.

7. Verfahren nach Anspruch 6,
**dadurch gekennzeichnet,**
**dass** die exothermen Startermaterialien mindestens zwei exotherme Startermaterialien aufweisen, die bei verschiedenen Temperaturen wirken.

8. Verfahren nach einem der Ansprüche 1 bis 7,
**gekennzeichnet durch** das Hinzufügen von Styrol zu dem flüssigen Harz.

9. Verfahren nach Anspruch 8,
**dadurch gekennzeichnet,**
**dass** die Menge an Styrol etwa 2 bis 10 Vol.-% des flüssigen Harzes beträgt.

10. Verfahren nach einem der Ansprüche 1 bis 9,
**gekennzeichnet durch** das Erhitzen des Kabels (10) während des Aushärtungsprozesses.

11. Verfahren nach Anspruch 1,
**gekennzeichnet durch** ein kontrolliertes Kühlen des Kabels (10) während eines Prozesses nach dem Aushärten, um eine ordnungsgemäß ausgehärtete Harzmatrix zu gewährleisten.

12. Verwenden eines Verbundkabels (10), hergestellt nach einem der vorhergehenden Ansprüche 1 bis 11, als ein Bohrloch-Arbeitskabel.

## Revendications

1. Procédé de fabrication d'un câble composite (10) comprenant une fibre (50) dans une matrice polymère (9) et ayant au moins un conducteur (1, 2, 3), comprenant les étapes de : a) fourniture d'au moins un conducteur électrique (1, 2, 3) recouvert d'un isolant (4, 5, 6, 12), b) fourniture d'au moins une fibre (50) pour la résistance, c) enduction des fibres (50) d'une résine liquide thermodurcissable ou thermoplastique, d) combinaison des fibres (50) et des conducteurs (1, 2, 3) pour former un câble (10), et e) traction du câble résultant (10) à travers une station de cuisson (36) pour durcir la matrice en résine - fibres (9), f) **caractérisé en ce que** les conducteurs isolés (1, 2, 3) sont chauffés avant d'être combinés aux fibres (50).

2. Procédé selon la revendication 1, **caractérisé en ce que** les conducteurs isolés sont chauffés à une température d'au moins 150 degrés Celsius avant d'être combinés aux fibres (50).

3. Procédé selon la revendication 1 ou 2, **caractérisé par** le fait d'inclure un traitement de la surface extérieure des conducteurs électriques et de la gaine de l'isolant électrique (4, 5, 6, 12) avant de combiner la gaine de l'isolant (4, 5, 6, 12) avec le conducteur (1, 2, 3) avec la matrice à fibres de carbone (9).

4. Procédé selon la revendication 3, **caractérisé en ce que** la surface de l'isolant (4, 5, 6, 12) est traitée avec un processus de décharge électrique.

5. Procédé selon l'une des revendications 1 à 4, **caractérisé en ce que** les fibres (50) et la résine passent par une étape de préformage avant le poste de cuisson (36), où les fibres (50) sont agencées avec une orientation parallèle les unes aux autres et aux conducteurs (1, 2, 3).

6. Procédé selon la revendication 1, **caractérisé par** le fait d'inclure l'ajout d'agents de démarrage exothermiques à la résine liquide de telle sorte qu'un profil de température sensiblement égal à travers le câble (10) est réalisé pendant la cuisson.

7. Procédé selon la revendication 6, **caractérisé en ce que** les agents de démarrage exothermiques comprennent au moins deux agents de démarrage exothermiques qui agissent à différentes températures.

8. Procédé selon l'une des revendications 1 à 7, **caractérisé par** le fait d'inclure l'ajout de styrène à la résine liquide.

9. Procédé selon la revendication 8, **caractérisé en ce que** la quantité de styrène est environ de 2 à 10% en volume de la résine liquide.

10. Procédé selon l'une des revendications 1 à 9, **caractérisé par** le chauffage du câble (10) pendant le processus de cuisson.

11. Procédé selon la revendication 1, **caractérisé par** un refroidissement contrôlé du câble (10) pendant un processus de post-cuisson pour garantir une matrice en résine correctement durcie.

12. Utilisation d'un câble composite (10) fabriqué selon l'une des revendications précédentes 1 à 11, destiné à être utilisé comme câble de bonne intervention.
